# EUROPEAN PATENT APPLICATION

(11) **EP 4 748 906 A1**
(43) Date of publication of application: **27.05.2026**
(21) Application number: 24215485.4
(22) Date of filing: 26.11.2024
(51) Int. Cl.: C10B 47/06, C10B 53/02, C10L 5/44, C10B 47/14

(54) **A REACTOR, A PLANT AND A PROCESS FOR THERMOCHEMICAL CONVERSION OF SOLID BIOMASS TO BIOCHAR**

(71) Applicant: C44-Zittau GmbH, 02763 Zittau (DE)
(72) Inventor: HOLZWARTH, Valentin, 8304 Wallisellen (CH)
(74) Representative: Ullrich & Naumann PartG mbB

(57) **Abstract**

The present invention relates to a reactor for thermochemical conversion of solid biomass to biochar, in particular pyrolysis, consisting of a reactor chamber with a reactor chamber wall, a reactor chamber bottom, an inlet opening and an outlet opening, an outer retort arranged within the reactor chamber with an outer retort wall, an outer retort bottom, an outer retort lid and an outer retort opening, and an inner retort removably arranged in the outer retort with an inner retort wall, an inner retort bottom, an inner retort lid and an inner retort opening, wherein at least the partial, preferably complete outer surface of the inner retort wall and/or at least the partial, preferably complete outer surface of the inner retort bottom and at least the partial, preferably complete inner surface of the outer retort wall and/or at least the partial, preferably complete inner surface of the outer retort bottom form an interspace, wherein at least the partial, preferably complete outer surface of the outer retort wall and/or at least the partial, preferably complete outer surface of the outer retort bottom and at least the partial, preferably complete inner surface of the reaction chamber wall and/or at least the partial, preferably complete inner surface of the reaction chamber bottom form a flow channel for guiding a gaseous heating medium from the inlet opening to the outlet opening, wherein the flow channel comprises at least one flow element suitable for causing pressure loss within the gaseous heating medium. Additionally, the invention relates to a plant and a process for the thermochemical conversion of solid biomass to biochar, in particular pyrolysis.

## Description

### FIELD OF THE INVENTION

The present invention relates to a reactor, a plant and a method for the thermochemical conversion of solid biomass to biochar, in particular pyrolysis.

### BACKGROUND OF THE INVENTION

Thermochemical conversion generally refers to the thermal decomposition of chemical compounds, in which high temperatures cause the molecular bonds of larger molecules to break apart. Thermochemical conversion processes include combustion (to release heat), gasification (to produce high-calorific gases), and pyrolysis.

In particular, pyrolysis is a thermochemical conversion process in which organic compounds within the feedstock, particularly solid biomass, are broken down at high temperatures, largely in the absence of oxygen. The elevated temperatures cause certain chemical bonds in the feedstock to break, while the lack of oxygen prevents complete oxidation or combustion.

A wide range of pyrolysis processes are known from the prior art, differing in terms of process conditions, feedstock types, and the method of heat supply for the reaction. In direct pyrolysis processes, the biomass to be pyrolyzed is heated using combustion gases. The heat energy required for thermochemical conversion can be derived directly from the biomass itself. The reaction temperature is controlled by regulating the air supply within the reactor, and heat is generated through partial oxidation occurring inside the reactor. Alternatively, a gaseous heating medium, in particular combustion gases, is introduced into the reactor.

In indirect pyrolysis processes, the reactor is completely sealed to prevent air from entering. The heat required for the reaction is transferred from outside the reactor to its interior, allowing for oxygen-free atmospheres to be maintained in a controlled manner. This process increases the yield of biochar. The external heating is typically provided by a gaseous heating medium.

All pyrolysis processes are characterized by the pyrolysis of feedstock at temperatures ranging from 250°C to 900°C, with the conversion gas remaining at near-atmospheric pressure throughout the system. The resulting pyrolysis products are diverse and generally consist of volatile gases, condensable bio-oils, and biochar. The yield and composition of these products depend on several factors, including the type of feedstock, process conditions (particularly reaction temperature), any additives used, and the residence time.

In pyrolysis processes conducted at high temperatures, with a rapid heating rate and short residence time (preferably a few seconds) of the feedstock in the reaction zone, liquid bio-oils are predominantly formed. However, the pyrolysis process described herein focuses on the production of solid energy sources, particularly biochar, from solid biomass. This is achieved by a slow process control, characterized by low temperatures, low heating rates, and long residence times, preferably lasting hours or even days.

In the prior art, slow pyrolysis processes are known, in which solid biomass is fed into a reactor chamber in batches. In these processes, the biomass is placed into one or more retorts. A retort is a sealed container or vessel in which the feedstock is placed in form of a biomass bed. The retorts are then inserted into the reactor chamber sequentially, where hot combustion gases flow through each retort. The supplied heat initiates and sustains the thermochemical conversion of the solid biomass. However, this process has significant disadvantages. The combustion gases flowingthrough the retorts become enriched with pollutants, in particular gaseous and particulate emissions, which necessitates the implementation of complex flue gas cleaning systems after pyrolysis. Additionally, the process can only be operated as a discontinuous process, since the insertion of the retorts into the reactor chamber, the introduction of hot combustion gases, the discharge of the cooled gases, and the removal of the resulting biochar all occur in separate, sequential steps for each retort. This batch processing limits the efficiency and continuous operation of the pyrolysis system.

From WO 2010/132970 A1, an advancement of the retort process has become known, in which individual retorts are placed within a reactor chamber. The solid biomass contained in the retorts is subjected sequentially to drying, heating, and pyrolysis. Following this, the biochar produced during thermochemical conversion is cooled in the reaction chamber, and finally, removed from it. During drying and heating, as well as during thermochemical conversion, the solid biomass is directly exposed to hot combustion gases generated from the combustion of pyrolysis gases. To enable continuous operation, at least three independent reactor chambers are provided, wherein drying, pyrolysis, and cooling occur simultaneously in each chamber. The pyrolysis gases produced are combusted in a burner, and the resulting combustion gases are used in direct contact with the feedstock materials for drying and pyrolysis. However, in this process, significant heat losses occur due to the sequential process steps.

Processes for the production of biochar are also known from US 2013/011803 A1 and EP 3 516 011 B1, in which solid biomass in retorts is pyrolyzed, and the combustible conversion gases produced by the pyrolysis are burned to generate hot combustion gases. The retorts are introduced into at least one reaction chamber in a sequential manner. The conversion gases generated during pyrolysis are directed to a combustion chamber where they are burned into combustion gases. The combustion gases then provide the heat required for pyrolysis. The heating of the solid biomass in the retorts is achieved indirectly by the combustion gases, through the heating of the retorts via a partition wall. An interspace surrounding the retort is formed between the partition wall and an outer wall of the retort. The retorts are sealed off from the entry of hot combustion gases. A disadvantage of the mentioned processes remains the high heat losses resulting from the indirect heating of the retorts through a partition wall. The main cause is the largely unrestricted flow of hot combustion gases around the partition wall, which leads to reduced heat transfer and consequently significant heat losses

Accordingly, it is an object of the present invention to improve and further develop a reactor, a plant, and a method in such a way that, during the thermochemical conversion of solid biomass into biochar, higher heat recovery is achieved, enabling the reactor, plant, and method to operate more efficiently than conventional reactors, plants, and methods. Moreover, the reactor, plant, and method should be distinct from conventional systems in terms of their operation and performance.

### SUMMARY OF THE INVENTION

This object is solved by the subject matter of the present invention.

According to a first aspect, the invention provides a reactor for thermochemical conversion of solid biomass to biochar, in particular pyrolysis. The reactor consists of a reactor chamber with a reactor chamber wall, a reactor chamber bottom, an inlet opening and an outlet opening. An outer retort is arranged within the reactor chamber with an outer retort wall, an outer retort bottom, an outer retort lid and an outer retort opening. An inner retort is removably arranged in the outer retort with an inner retort wall, an inner retort bottom, an inner retort lid and an inner retort opening. At least the partial, preferably complete outer surface of the inner retort wall and/or at least the partial, preferably complete outer surface of the inner retort bottom forms an interspace together with at least the partial, preferably complete inner surface of the outer retort wall and/or at least the partial, preferably complete inner surface of the outer retort bottom. At least the partial, preferably complete outer surface of the outer retort wall and/or at least the partial, preferably complete outer surface of the outer retort bottom form a flow channel together with at least the partial, preferably complete inner surface of the reaction chamber wall and/or at least the partial, preferably complete inner surface of the reaction chamber bottom for guiding a gaseous heating medium from the inlet opening to the outlet opening. The flow channel comprises at least one flow element is suitable for causing pressure loss within the gaseous heating medium.

The present invention further provides in a second aspect a plant for the thermochemical conversion of solid biomass to biochar, in particular pyrolysis, comprising
- a plurality of reactors according to the first aspect, in particular five to seven reactors, preferably six reactors,
- at least one combustion chamber with at least one firing device, at least one air supply, at least one combustion chamber inlet opening and at least one combustion chamber outlet opening, and
- at least one flue gas device, in particular a chimney.

The outer retort opening of at least one reactor is fluidically connected to the combustion chamber inlet opening by at least one conversion gas line. The combustion chamber outlet opening is fluidically connected to the inlet opening of at least the one reactor by at least one combustion gas line. The outlet opening of at least the one reactor is fluidically connected to the flue gas device by at least one flue gas line.

According to a third aspect, the invention relates to process for the thermochemical conversion of solid biomass to biochar, in particular pyrolysis, for a plant according to the second aspect, comprising the process steps:
- If necessary, drying the solid biomass;
- Filling an inner retort with the solid biomass and sealing the inner retort with the inner retort lid;
- Arranging the inner retort in an outer retort in temporally consecutive order and sealing the outer retort with the outer retort lid;
- Heating, at least partially, preferably completely indirect, the solid biomass in the inner retort by a gaseous heating medium through the outer retort wall and the interspace;
- Thermally converting the solid biomass to biochar within the inner retort under formation of conversion gases;
- If necessary, cooling and preparing of the resulting biochar.

The conversion gases formed during thermochemical conversion from at least one reactor are at least partially, preferably completely discharged through the inner retort opening into the interspace. The conversion gases flow at least partially, preferably completely through the outer retort wall opening into the conversion gas line, wherein the conversion gases are fed at least partially, preferably completely into the combustion chamber through the combustion chamber inlet opening. The conversion gases are burned at least partially, preferably completely to combustion gases within the combustion chamber by at least one firing device. The combustion gases are used as a gaseous heating medium and is fed at least partially, preferably completely into the reactor chamber of at least one reactor for indirect heating of the solid biomass. The gaseous heating medium is discharged as flue gas by the flue gas line from at least one reactor by at least one flue gas device.

### FIGURES

There are several ways how to design and further develop the teaching of the present invention in an advantageous way. To this end, it is to be referred to the patent claims subordinate to patent claim 1 on the one hand and to the following explanation of preferred examples of embodiments of the invention, illustrated by the drawing on the other hand. In connection with the explanation of the preferred embodiments of the invention by the aid of the drawing, generally preferred embodiments and further developments of the teaching will be explained. In the drawing
- Fig. 1a: shows a reactor according to the first aspect of the invention in a schematic side view;
- Fig. 1b: shows the reactor as depicted in Fig. 1a in a schematic top view.
- Fig. 2: shows a side view of a sectional plane A-A through the reactor as depicted in Fig. 1a;
- Fig. 3a - 3d: show in a schematic side view of four different vertical sectional planes A-A to D-D through the reactor as depicted in Fig. 1a. Fig. 3a shows a sectional plane A-A through the reactor and the conversion gas line. Fig. 3b shows a sectional plane B-B through the reactor and the combustion gas line. Fig. 3c shows a sectional plane C-C through the reactor and the flue gas line. Fig. 3d shows a sectional plane D-D through the reactor with a rotation angle of 45 degrees from sectional plane C-C;
- Fig. 4a - 4b: show in a schematic top view of two different horizontal sectional planes E-E and F-F through the reactor as depicted in Fig. 1a. Fig. 4a shows the sectional plane E-E through the reactor at the center height of the outlet opening. Fig. 4b shows the sectional plane F-F through the reactor at the lower end of the outlet opening;
- Fig. 5a - 5c: show flow velocities of the gas flows within the reactor from Figure 1a in schematic side views, shown across the sectional planes A-A to C-C as depicted in Figures 3a to 3c;
- Fig. 6: shows a plant according to the second aspect of the invention in a schematic top view with a plurality of reactors according to the first aspect of the invention;
- Fig. 7: shows the plant depicted in Fig. 6 in a schematic side view;
- Fig. 8: shows a flow chart illustrating the method for thermochemical conversion of solid biomass to biochar according to the third aspect of the invention;

### DETAILED DESCRIPTION OF THE INVENTION

### Definitions

In order to provide a clear and consistent understanding of the specification and claims, and the scope to be given such terms, the following definitions are provided.

According to the invention, the term "thermochemical conversion" relates in particular to the pyrolysis process. In this process, biomass is heated in the absence of oxygen, breaking it down into bio-oil, conversion gas and biochar.

As used herein, "solid biomass" refers to renewable organic material, particularly derived from plants, that can be decomposed through thermochemical conversion processes. Biomass may include wood or wood residues, such as logs, wood chips, sawdust, bark, and forest debris. Additionally, biomass can comprise agricultural residues, particularly leftover materials from crops like corn stalks, wheat straw, rice husks, fruit peels and sugarcane bagasse, as well as energy crops such as switchgrass, miscanthus, and fast-growing trees like willow and poplar.

The term "biochar" indicates a solid carbon-rich material as a product of thermochemical conversion. Biochar is a black, porous material that essentially contains up to 95 % carbon, up to 3 % hydrogen and up to 6 % oxygen by weight.

The term "conversion gases" refers to the gaseous, non-condensable products of thermochemical conversion. In addition to inert components, such as water vapor (H₂O) and carbon dioxide (CO₂), conversion gas contains combustible elements, including hydrogen (H₂), carbon monoxide (CO), methane (CH₄), and volatile hydrocarbon compounds. The calorific value of conversion gas typically ranges from 4 to 8 MJ/m³, based on standard volume. Its composition generally includes up to 60 vol.-% CO₂, up to 35 vol.-% CO, up to 5 vol.-% H₂, and up to 10 vol.-% volatile hydrocarbon compounds.

The term "combustion gases" generally refers to the byproducts released during the combustion of fuel. According to the invention, combustion gases particularly refer to conversion gases from thermochemical conversion processes that are burned to provide heat.

The term "flue gases," as used herein, refers to the gaseous heating medium exiting the reactor after transferring sensible heat within the reactor.

The term "gaseous heating medium," as used herein, refers to any gaseous fluid capable of transporting and transferring thermal energy in form of sensible or latent heat. Examples of gaseous heating media include saturated and/or superheated steam, combustion gases, flue gases, and conversion gases. According to the invention, the term gaseous heating medium particularly refers to combustion gases that are burned to provide the heat for the pyrolysis process.

The term "reactor chamber," as used herein, refers to the containment area of the reactor where heat transfer from the gaseous heating medium to the outer retort occurs. The reactor chamber is an enclosed volume that is sealed off from external influences.

The terms "outer retort" and "inner retort," as used herein, refer to vessels or containers designed for conducting chemical reactions in a controlled environment, with the interior sealed from the external environment. These retorts ensure that the reaction takes place in isolation from external influences, such as air or contaminants, allowing for precise control of reaction conditions like temperature and pressure.

The inner retort refers to a container where the thermochemical conversion takes place. Solid biomass is placed inside the inner retort, which remains sealed during the process. During thermochemical conversion, the conversion gases are discharged from the inner retort.

The outer retort is an additional containment vessel that holds the inner retort during the thermochemical conversion process. The outer retort is placed within the reactor chamber, making it an integral part it.

As used herein, the term "interspace" refers to an intentionally created volume between the outer surface of the inner retort wall and/or the inner retort bottom, and the inner surface of the outer retort wall and/or the outer retort bottom. The interspace is designed in such a way that at least one gaseous medium, particularly conversion gas, is present, preferably flowing through it. Heat is transferred via heat exchange from the outer retort wall and/or outer retort bottom to the gaseous medium, and ultimately to the inner retort wall and/or inner retort bottom.

The term "flow channel," as used herein, refers to an intentionally created volume between the outer surface of the outer retort wall and/or the outer retort bottom, and the inner surface of the reaction chamber wall and/or the reaction chamber bottom. A flow channel can be any fluid-conducting area within the reaction chamber that is suitable for transferring the heat of the flowing fluid, particularly the gaseous heating medium, to the outer retort. For example, a flow channel can be designed as a coiled and/or winding pipeline.

The term "flow element" generally refers to a component or structural measure within the flow channel and/or on the elements enclosing the flow channel, such as the reaction chamber and/or outer retort, designed to deliberately influence the fluid flow, particularly gas flow. The flow element affects the speed, direction, and pressure of the fluid, thus causing a controlled pressure loss within a specific gas flow. The pressure loss is generated, for example, by friction along the flow element, by vortices resulting from the breakdown of laminar flow at the flow element, and/or by backflow effects due to a cross-sectional constriction caused by the flow element. for example, components that work as flow elements can be any kind of plate, in particular flapper plates, flow deflectors, interfering bodies and/or guiding elements. A structural measure can, for example, be a recess, preferably groove or slot, and/or an extension attached to at formed on the flow-facing surface of the elements surrounding the flow channel.

The transitional term "comprising", which is synonymous with "including", "containing," or "characterized by", is inclusive or open-ended and does not exclude additional, unrecited elements or method steps. The transitional phrase "consisting of" excludes any element, step, or ingredient not specified in the claim.

### Reactor

According to a first aspect, the invention provides a reactor for thermochemical conversion of solid biomass to biochar, in particular pyrolysis. The reactor consists of a reactor chamber with a reactor chamber wall, a reactor chamber bottom, an inlet opening and an outlet opening. An outer retort is arranged within the reactor chamber with an outer retort wall, an outer retort bottom, an outer retort lid and an outer retort opening. An inner retort is removably arranged in the outer retort with an inner retort wall, an inner retort bottom, an inner retort lid and an inner retort opening. At least the partial, preferably complete outer surface of the inner retort wall and/or at least the partial, preferably complete outer surface of the inner retort bottom form an interspace together with at least the partial, preferably complete inner surface of the outer retort wall and/or at least the partial, preferably complete inner surface of the outer retort bottom. At least the partial, preferably complete outer surface of the outer retort wall and/or at least the partial, preferably complete outer surface of the outer retort bottom form a flow channel together with at least the partial, preferably complete inner surface of the reaction chamber wall and/or at least the partial, preferably complete inner surface of the reaction chamber bottom, for guiding a gaseous heating medium from the inlet opening to the outlet opening. The flow channel comprises at least one flow element suitable for causing pressure loss within the gaseous heating medium.

The present invention has identified that a substantially evenly distributed flow around the outer retort caused by a gaseous heating medium enables an improved heat transfer within the reactor.

Instead of allowing a gaseous heating medium to flow past the outer retort without any directed flow control, the inventive reactor incorporates a flow element in the flow channel that induces pressure loss in the flow. This provides the technical advantage that, upon entering the channel, the gaseous heating medium is more evenly distributed across the flow-facing surface of the outer retort, resulting in heat of the gaseous heating medium being transferred across a larger surface area of the outer retort.

Furthermore, the flow element creates a damming effect, which reduces the flow velocity within the flow channel compared to a freely flowing fluid. This also contributes to improved heat transfer and more efficient heat recovery.

In addition, the flow element generates turbulence, establishing a turbulent flow regime in the section of the channel where the flow element is positioned. Turbulent flow generally enhances heat transfer compared to laminar fluid flow, further improving heat recovery in the reactor.

Thus, the reactor according to the invention provides the technical advantage of higher heat recovery within the reactor. Therefore the flow element enables the reactor to operate more efficiently than conventional reactors.

According to one embodiment of the invention, the reactor chamber and/or the outer retort and/or the inner retort has/have a cylindrical shape. The flow channel does not have any dead zones or discontinuous changes in surface geometry along the flow direction, ensuring that the surfaces facing the flow are evenly exposed. This results in improved heat transfer through the outer and/or inner retort. Additionally, heat is evenly distributed throughout the reactor, particularly within the solid biomass bed, which enables uniform thermochemical conversion. Furthermore, the cylindrical shape of the outer and/or inner retort allows for easy handling, as the inner retort can be inserted into the outer retort in a primarily linear vertical motion, for example, using a crane or wheel loader.

Alternatively or additionally, the interspace and/or the flow channel has/have an annular cross section. The advantage of using an interspace and/or the flow channel with annular cross section is that the gas flow through the flow channel is uniformly distributed around the circumference. Therefore, no local pressure loss due to a cross-sectional variation is caused.

In one embodiment of the invention, the inner retort opening is arranged at the inner retort bottom and/or the outer retort opening is arranged at the outer retort wall. The advantage of positioning the inner retort opening at the inner retort bottom is that the longest possible distance must be traveled from the conversion gases to pass through the interspace. This means that the conversion gases are preheated more by the outer retort and emit more heat to the inner retort. Alternatively or additionally, the outer retort opening is arranged at the outer retort wall. In one embodiment of the invention, the inlet opening is arranged at the reaction chamber bottom and/or the outlet opening is arranged at the reactor chamber wall. The advantage of positioning the inlet opening and the outlet opening at a longest possible distance causes the gaseous heating medium improved heat transfer to the outer retort due to the increased pathway through the flow channel.

According to one embodiment of the invention, the flow channel has an average width between 50 mm and 250 mm. For example, the width can be 50 mm, 75 mm, 100 mm, 125 mm, 150 mm, 175 mm, 200 mm, 225 mm, or 250 mm. In a more specific embodiment, the average width is between 100 mm and 200 mm. Preferably, the width is 150 mm.. A width of the flow channel within the specified limits ensures a gentle gas flow within the flow channel. Therefore, the heat transfer is optimized. However, the width of the flow channel is limited at an upper value because a larger flow channel would reduce the efficiency of heat transfer. On the other hand, if the flow channel is too narrow, it leads to an increased pressure drop, which hinders or obstructs the flow through the flow channel. Alternatively or additionally, the flow channel has an average width between 50 mm and 250 mm, in particular 100 mm and 200 mm, preferably 150 mm at the position the flow element is arranged.

According to one embodiment of the invention, the flow element is arranged in the flow channel between the inlet opening and the outlet opening, wherein preferably the side of the flow element facing away from the inlet opening is arranged at the edge of the outlet opening that is closer to the inlet opening. In general, it is advantageous, if the flow element is positioned at the end of the flow channel within the flow of the heating medium. This allows a simple and effective pressure drop on the entire circumference of the flow channel. Positioning directly below the outlet opening ensures that the largest possible surface area of the outer retort, which is surrounded by the gaseous heating medium in the flow channel, is evenly exposed. As a result, heat is efficiently transferred from the gaseous heating medium to the outer retort within the reactor.

In another embodiment of the invention the flow element extends essentially radially into the flow channel, preferably in the form of a circular ring. Thereby the flow element is arranged with the radially inner end on the outer retort wall or with the radially outer end on the reactor chamber wall. In this way, a gap is formed between the flow element and the reactor chamber wall or between the flow element and the outer retort wall. This offers the advantage of simple and cost-effective manufacturing. Additionally, a flow element protruding into the flow channel creates an effective flow resistance, resulting in a pressure drop in the gaseous heating medium. Due to this effect, the gaseous heating medium is evenly distributed within the flow channel along the surface of the outer retort. Overall, this achieves improved heat transfer within the reactor.

According to one embodiment of the invention, the gap has an average gap width of between 1 mm and 100 mm. For example, the gap width can be 1 mm, 10 mm, 20 mm, 30 mm, 40 mm, 50 mm, 60 mm, 70 mm, 80 mm, 90 mm, or 100 mm. In a more specific embodiment, the average gap width is between 20 mm and 70 mm. Preferably, the gap width is 60 mm. A gap within the specified limits allows for the technical effect to regulate the flow of the heating medium in the flow channel, thereby ensuring uniform distribution of the gaseous heating medium around the surface of the outer retort. At the same time, the gap is dimensioned wide enough to allow adequate amount of gaseous heating medium to pass through it.

In another embodiment of the invention that the flow channel comprises a plurality of guide elements that are arranged at least partially, preferably completely, more preferably equally spaced, at the outer surface of the outer retort wall and/or at the inner surface of the reactor chamber wall. Guide elements are flow-directing components that protrude into the flow channel. They are arranged in such a way that they direct the gaseous heating medium along the surface of the outer retort and/or the reaction chamber in a specific flow direction. For instance, guide elements can be plates arranged in a spiral configuration on the outer retort wall and/or the reaction chamber wall. In particular, these plates guide the gas flow in a spiral around the outer retort. This design increases the length of the path that the gaseous heating medium travels within the flow channel, thereby improving heat transfer to the inner retort.

In another embodiment of the invention the inlet opening is arranged in the reactor chamber wall and/or reactor chamber bottom in such a way that the gaseous heating medium is at least partially, preferably completely directed essentially perpendicular to the surface normal of the outer retort bottom when it is fed into the reactor chamber. This leads to a centralized flow of the gaseous heating medium towards the surface of the outer retort bottom, ensuring an even distribution around the outer retort. This enables improved heat transfer to the outer retort and overall better heat recovery within the reactor.

According to one embodiment of the invention, the outer retort wall, the outer retort bottom, the inner retort wall and/or the inner retort bottom are made of heat-resistant and/or heat-conducting material, in particular metal. Preferably, the material is steel. The average wall thickness may be between 4 mm and 15 mm. For example, the wall thickness can be 4 mm, 5 mm, 6 mm, 7 mm, 8 mm, 9 mm, 10 mm, 11 mm, 12 mm, 13 mm, 14 mm, or 15 mm. In a more specific embodiment, the wall thickness is between 6 mm and 10 mm. A heat-resistant material means that the reactor is more resistant and therefore more durable overall. A heat-resistant material allows the reactor to operate at the necessary process temperatures, ensuring durability under these conditions. Furthermore, a heat-conducting material facilitates fast and efficient heat transfer between the flow channel and interspace, as well as between the interspace and the solid biomass inside the inner retort.

According to one embodiment of the invention, an exhaust device for exhausting conversion gases is arranged inside the inner retort, wherein the exhaust device is arranged at the inner surface of the inner retort wall and/or the inner surface of the inner retort bottom and is fluidically connected to the inner retort opening. The exhaust device is designed to channel the conversion gases generated in the solid biomass bed out of the inner retort. This prevents pressure build-up inside the inner retort. Additionally, the conversion gases can be utilized as energy carriers to heat the reactor.

In one embodiment of the invention, the exhaust device is designed as a cylinder, wherein the exhaust device comprises an exhaust device wall with an exhaust device wall upper end formed at the distal end of the exhaust device, an exhaust device wall lower end adjacent to the inner surface of the inner retort wall and/or the inner surface of the inner retort bottom and an exhaust device cover arranged at the an exhaust device wall upper end. The cylindrical shape of the exhaust device allows the conversion gases to flow out evenly across the circumference of the solid biomass bed, ensuring a direct exit. This minimizes the residence time of the conversion gases inside the inner retort and prevents a pressure increase within the inner retort.

Alternatively or additionally the axial length of the exhaust device is at least partially, preferably completely the axial length of the inner retort, The axial length is particularly in the range of 10% to 90% of the inner retort's axial length. For example, the length can be 10%, 20%, 30%, 40%, 50%, 60%, 70%, 80%, or 90%. In a more specific embodiment, the axial length is between 25% and 75%. Particularly preferably, the axial length is between 40% and 60%. An extension of the exhaust device over the height of the inner retort allows the conversion gases to exit at different levels of the solid biomass bed in the most direct way possible. This minimizes the residence time of the conversion gases inside the inner retort.

According to one embodiment of the invention, the exhaust device wall comprises a plurality of exhaust slots arranged, preferably equally spaced, at the exhaust device wall. The distribution of exhaust slots along the exhaust device wall ensures a rapid and uniform exit of the conversion gases from the inner retort into the interspace. This design prevents pressure build-up and unnecessary heating of the conversion gases within the inner retort. Additionally, the exhaust slots may be formed in such a way that the area ratio of the exhaust slots to the total surface area of the exhaust device is between 0.05% and 0.25%. For example, the area ratio can be 0.05%, 0.1%, 0.15%, 0.2%, or 0.25%. In a more specific embodiment, the area ratio is between 0.1% and 0.2%. Preferably, the area ratio is 0.15%.

Alternatively or additionally, the exhaust slots have an elongate shape, in particular a rectangle cross section, extending in the axial direction from the exhaust device wall lower end to the exhaust device wall upper end and/or have a circular cross section. Such exhaust slots are easily and cost-effectively formed on the exhaust device wall.

According to one embodiment of the invention, the cross-sectional area of the exhaust slots increases or decreases in the axial direction from the exhaust device wall lower end to the exhaust device wall upper end. By varying the dimensions of the exhaust slots along the height of the exhaust device, the exhaust flow can be adjusted to correspond to the different volume flows of conversion gases generated during the thermochemical conversion within the solid biomass bed.

In one embodiment of the invention, the interspace has an average width of between 50 mm and 150 mm. For example, the width can be 50 mm, 75 mm, 100 mm, 125 mm, or 150 mm. In a more specific embodiment, the average width is between 75 mm and 125 mm. Preferably, the width is 100 mm. A width of the interspace within the specified limits ensures that the heat transfer between the outer retort and the inner retort can be purposefully optimized. However, the width of the interspace is limited at an upper value because a larger interspace would reduce the efficiency of heat transfer. On the other hand, if the interface is too narrow, it leads to an increased pressure drop, which hinders or obstructs the flow through the interspace.

In another embodiment of the invention, the reactor comprises at least one reactor insolation, in particular mineral wool, and/or at least one fireproof ceramic ramming mass, arranged at least partial, preferably complete at the outer surface of the reaction chamber wall. In particular a multi-part or multi-layer thermal insulation significantly reduces heat loss through the outer surfaces of the reactor. The technical advantage is that it makes the reactor more efficient using simple means.

According to one embodiment of the invention, the average inner diameter of the inner retort is between 1 m and 3 m, For example, the inner diameter can be 1 m, 1.2 m, 1.4 m, 1.6 m, 1.8 m, 2 m, 2.2 m, 2.4 m, or 3 m. In a more specific embodiment, the inner diameter is between 1.5 m and 2.5 m. Preferably, the inner diameter is between 1.8 m and 2 m Additionally or alternatively, the average height of the inner retort is between 2 m and 5 m. For example, the height can be 2 m, 2.5 m, 3 m, 3.5 m, 4 m, 4.5 m, or 5 m. In a more specific embodiment, the height is between 3 m and 4 m. Preferably, the height is 3.5 m.. This ensures that heat is transferred uniformly and quickly through the inner retort to the solid biomass inside. The specified surface-to-volume ratio of the solid biomass bed enables complete, uniform, and efficient thermochemical conversion within the defined limits. Alternatively or additionally, the inner volume of the inner retort is between 5 m³ and 15 m³, For example, the volume can be 5 m³, 6 m³, 7 m³, 8 m³, 9 m³, 10 m³, 11 m³, 12 m³, 13 m³, 14 m³, or 15 m³. In a more specific embodiment, the inner volume is between 7 m³ and 10 m³. Preferably, the inner volume is between 8 m³ and 9 m³.

### Plant

The present invention further provides in a second aspect a plant for the thermochemical conversion of solid biomass to biochar, in particular pyrolysis, comprising
- a plurality of reactors according to the first aspect, in particular five to seven reactors, preferably six reactors,
- at least one combustion chamber with at least one firing device, at least one air supply, at least one combustion chamber inlet opening and at least one combustion chamber outlet opening, and
- at least one flue gas device, in particular a chimney.

The outer retort opening of at least one reactor is fluidically connected to the combustion chamber inlet opening by at least one conversion gas line. The combustion chamber outlet opening is fluidically connected to the inlet opening of at least the one reactor by at least one combustion gas line. The outlet opening of at least the one reactor is fluidically connected to the flue gas device by at least one flue gas line.

The present invention has identified that with a clever design of the system, featuring multiple reactors and a combustion chamber for generating process heat, an plant can be provided that enables improved heat recovery during operation using simple means.

The majority of the reactors are connected to the combustion chamber via a conversion gas line. The conversion gases, formed during the thermochemical conversion, are preheated via the interspace and then at least partially directed into the combustion chamber, where they are burned to form combustion gases. The combustion gases are subsequently at least partially returned from the combustion chamber via a combustion gas line to at least one reactor, where they act as a gaseous heating medium. The heat released during combustion is transferred from the gaseous heating to the reactor, particularly to the outer retort, via the flow channel. After exiting through the outlet opening, the cooled gaseous heating medium, now referred to as flue gas, is at least partially directed through a flue gas line to a flue gas device, where it is exhaust from the plant.

Thus, the plant according to the invention provides the technical advantage of higher heat recovery within the reactor. Therefore the reactors enables the plant to operate more efficiently than conventional plants.

In one embodiment of the invention the reactors are operable independently of each other, in particular temporally consecutively, preferably one after the other. Due to sequential operation of the individual reactors, the process steps to be performed, particularly the thermochemical conversion, occur at different times for at least two reactors. As a result, the process steps of heating, pyrolysis, and cooling do not occur simultaneously. This allows the conversion gases generated during the thermochemical conversion in at least one reactor to be used for providing heat to at least one other reactor. The advantage of this is that the chemical energy contained in the conversion gases is utilized, leading to a more efficient operation of the plant.

According to another embodiment of the invention, the reactors are arranged in a circle around the combustion chamber, wherein the combustion gas line is designed to have the shortest possible length. For example, the reactors, preferably six, are arranged essentially in a circle around the combustion chamber, with the conversion gas line of at least one reactor leading into the combustion chamber via the shortest possible route, particularly in a straight and direct path. Similarly, a combustion gas line runs from the combustion chamber to at least one reactor via the shortest route, particularly in a straight and direct path. The advantage of this arrangement is that heat losses occurring during the flow through the conversion gas line and the combustion gas line are minimized, which enhances the plant's efficiency. Additionally, construction costs can be reduced.

In another embodiment of the invention, the flue gas device comprises at least one turbomachine, in particular an induced draft, wherein the turbomachine generates a vacuum in the combustion chamber. The turbomachine generates a vacuum in the fluidically connected components of the plant. The reactor, particularly the interspace, is connected to the combustion chamber through the outer retort opening and the conversion gas line. Furthermore, the combustion chamber is connected to the reactor, particularly the flow channel, via the combustion gas line. Finally, the reactor, particularly the flow channel, is connected to the flue gas device through the flue gas line. The vacuum causes the gases to move through the different sections of the plant, following the pressure gradient, and are ultimately expelled from the system. This eliminates the need for complex flow regulation, allowing the plant to be controlled with fewer and simpler means.

In another embodiment of the invention, the plant comprises at least one recirculation device for at least partial, preferably complete recirculation of the gaseous heating medium discharged from at least one reactor back into the combustion chamber by a recirculation line, wherein the recirculation device is arranged in the flue gas line before the flue gas device. This enables the temperature within the combustion chamber, particularly at the combustion chamber outlet opening, to be reduced by the introduction of at least a portion of the flue gas. The flue gas consists mainly of inert gas components that cannot be further combusted, so they are only reheated in the combustion chamber. Consequently, the thermal energy released during the combustion of the conversion gases is retained as sensible heat in the overall gas flow at the combustion chamber outlet, lowering the temperature. The targeted regulation of the temperature in the combustion chamber or the gaseous heating medium as it enters the reactor improves the heat utilization within the plant, making it more efficient.

In one embodiment of the invention, the recirculation device comprises at least one control device, in particular a control valve, for controlling the mass flow of the recirculated gaseous heating medium. The control device allows for precise regulation of the amount of recirculating flue gas, enabling adjustable temperature control within the plant. This provides the advantage of enhanced heat utilization, leading to greater efficiency in the plant's overall operation.

In another embodiment of the invention, the plant comprises at least one decoupling device for decoupling heat and/or energy form the plant, in particular a heat exchanger, heat engine and/or turbine, preferably an Organic Rankine Cycle (ORC) turbine. This has the advantage that the thermal energy not utilized during the thermochemical conversion can be extracted from the plant and used, particularly as electrical or thermal energy. This increases the overall efficiency of the plant, allowing it to be operated more efficiently.

### Method

According to a third aspect, the invention relates to process for the thermochemical conversion of solid biomass to biochar, in particular pyrolysis, for a plant according to the second aspect, comprising the process steps:
- If necessary, drying the solid biomass;
- Filling an inner retort with the solid biomass and sealing the inner retort with the inner retort lid;
- Arranging the inner retort in an outer retort in temporally consecutive order and sealing the outer retort with the outer retort lid;
- Heating, at least partially, preferably completely indirect, the solid biomass in the inner retort by a gaseous heating medium through the outer retort wall and the interspace;
- Thermally converting the solid biomass to biochar within the inner retort under formation of conversion gases; and
- If necessary, cooling and preparing of the resulting biochar.

The conversion gases formed during thermochemical conversion from at least one reactor are at least partially, preferably completely discharged through the inner retort opening into the interspace. The conversion gases flow at least partially, preferably completely through the outer retort wall opening into the conversion gas line, wherein the conversion gases are at least partially, preferably completely fed into the combustion chamber through the combustion chamber inlet opening. The conversion gases are burned at least partially, preferably completely to combustion gases within the combustion chamber by at least one firing device. The combustion gases are used as a gaseous heating medium and is fed at least partially, preferably completely into the reactor chamber of at least one reactor for indirect heating of the solid biomass. The gaseous heating medium is discharged as flue gas by the flue gas line from at least one reactor by at least one flue gas device.

In one embodiment of the invention the reactors, one after the other, carry out the individual process steps in such a way that the firing device is essentially continuously supplied with conversion gas from the reactors and that the temperature and/or the mass flow rate of the combustion gases at the combustion chamber outlet opening is essentially constant. The sequential operation of the reactors allows for a continuous process flow. This means that the heat required for the thermochemical conversion is primarily supplied by the reactors within the process, reducing or eliminating the need for additional firing or external heat sources. Additionally, the consistent process flow ensures a stable product quality and simplifies plant complexity. This makes it possible to carry out the process efficiently with relatively simple means.

According to another embodiment of the invention, the solid biomass is thermally converted to biochar with an carbon content between 75 wt.-% and 95 wt.-%, in particular between 80 wt.-% and 90 wt.-%, preferably 85 wt.-%. Biochar is used, for example, for soil improvement and/or as a secondary fuel, particularly as charcoal for grilling. By providing a product with a carbon content within the specified range, a high-quality product is obtained that offers good combustion properties. Moreover, the product is stable, making it suitable for storage.

In another embodiment of the invention the temperature of the conversion gas at the inner retort opening is between 500 °C and 250 °C, in particular between 400 °C and 300 °C, preferably 350 °C and/or at the outer retort opening between 800 °C and 500 °C, in particular between 700 °C and 600 °C, preferably 650 °C. One advantage achieved is a sufficiently fast heat transfer within the interspace and a uniform thermochemical conversion of the solid biomass inside the inner retort. Furthermore, condensation of bio-oil components contained in the conversion gases is prevented.

According to another embodiment of the invention, the temperature of the gaseous heating medium at the inlet opening is between 1200 °C and 700 °C, in particular between 1000 °C and 900 °C, preferably 950 °C and/or at the outlet opening between 900 °C and 600 °C, in particular between 800 °C and 700 °C, preferably 750 °C. The associated benefit is that a sufficiently high heat input into the reactor is ensured, leading to rapid heat transfer from the gaseous heating medium into the inner retort.

In another embodiment of the invention, the flue gas is at least partial, preferably complete recirculated into the combustion chamber through the recirculation line after discharging from at least one reactor. This allows the temperature within the combustion chamber, particularly at the combustion chamber outlet, to be reduced by introducing at least part of the flue gas. The flue gas mainly consists of inert gas components that cannot be further combusted. Therefore, they are heated in the combustion chamber as additional material, and the thermal energy released by the combustion of conversion gases is contained as sensible heat in the total volume flow at the combustion chamber outlet. The advantage is that no complex plant control systems are required for temperature limitation.

In another embodiment of the invention, a control device controls the mass flow of the recirculated gaseous heating medium depending on the temperature of the combustion gases at the inlet opening and/or the outlet opening and/or on the temperature of the conversion gas at the inner retort opening and/or the outer retort opening. A control device allows the recirculating flue gas flow rate to be regulated so that the temperature at the combustion chamber outlet can be precisely adjusted to a desired value. As a result, the reactors can be heated to a defined temperature, enabling efficient plant operation and improved heat recovery within the system.

### DETAILED DESCRIPTION OF THE FIGURES

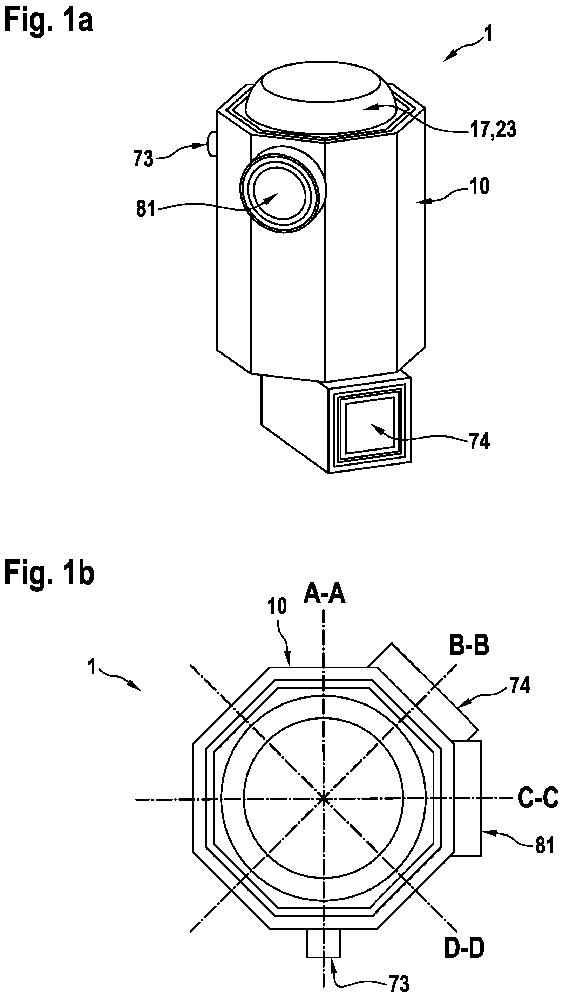

**Fig. 1** is showing a reactor 1 according to the first aspect of the invention in a schematic side view. The reactor 1 includes a reactor chamber 10, which comprises a reactor chamber wall 11 with a multi-layer reactor insulation 15 arranged around the reactor chamber wall 11. Furthermore, at the upper end of the reactor chamber 10, there is a reactor lid 17 for sealing off the interior of the reactor chamber 10. At the lower end of the reactor chamber 10, a combustion gas line 74 is formed, which directs a gaseous heating medium into the reactor 1. At the reactor chamber wall 11 are the conversion gas line 73 for discharging the conversion gases formed during the thermochemical conversion and a flue gas line 81 for discharging the outgoing flue gases. The combustion gas line 74, conversion gas line 73, and flue gas line 81 all have multi-layer thermal insulation. The reactor chamber 10 has an essentially cylindrical shape. The thermal insulation 15 arranged on the reactor chamber wall 10 has a hexagonal shape.

**Fig. 1b** is showing the reactor 1 as depicted in **Fig. 1a** in a schematic top view. Furthermore, four sectional planes A-A to D-D are shown, which are rotated by 45 degrees relative to each other in the circumferential direction of the reactor 1. Specifically:
- Sectional plane A-A shows a vertical cross-section through the reactor 1 and the conversion gas line 73;
- Sectional plane B-B shows a vertical cross-section through the reactor 1 and the combustion gas line 74;
- Sectional plane C-C shows a vertical cross-section through the reactor 1 and the flue gas line 84; and
- Sectional plane D-D shows a vertical cross-section through the reactor 1, where the sectional plane is rotated by 45 degrees around the sectional plane C-C.

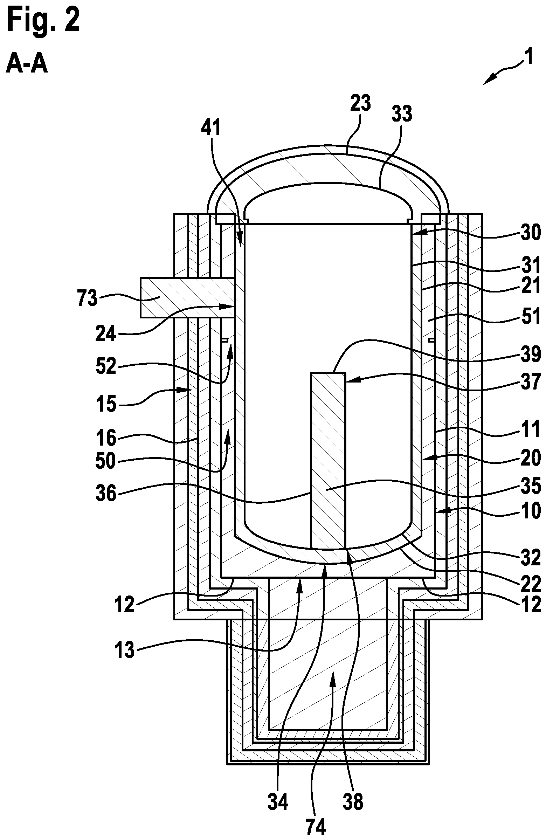

**Fig. 2** is showing a reactor 1 as depicted in **Fig. 1a** in the side view of sectional plane A-A. The reactor 1 includes a reactor chamber 10, an outer retort 20 formed within the reactor chamber 10, and an inner retort 30 housed within the outer retort 20.

The inner retort 30 comprises an inner retort wall 31, a domed inner retort bottom 32, and an openable and/or removable inner retort lid 33. The inner retort 30 has a cylindrical shape. Centrally located on the inner retort bottom 32 is an inner retort opening 34. Inside the inner retort 30, directly above the inner retort opening 34 and fluidly connected to it, is an exhaust device 35. The exhaust device 35 has a cylindrical shape, comprising a surrounding exhaust device wall 36, an exhaust device wall upper end 37, an exhaust device wall lower end 38, and an exhaust device cover 39 located at the exhaust device wall upper end 37. Multiple exhaust slots 40 (not shown) are arranged around the circumference of the exhaust device wall 36. Through the exhaust device 35 and the connected inner retort opening 34, the conversion gases produced during the thermochemical conversion of the solid biomass 2 in the inner retort 30 can be discharged from the inner retort 30.

The outer retort 20 comprises an outer retort wall 21, a domed outer retort bottom 22, and an openable and/or removable outer retort lid 23. An outer retort opening 24 is formed in the outer retort wall 21. The outer retort 20 has a cylindrical shape, corresponding to the inner retort 30, with a domed outer retort bottom 22. The inner retort 30 is fully housed within the outer retort 20, and the inner retort 30 can be removed from the reactor 1 via the openable outer retort lid 23. The outer retort lid 23 seals the inner retort 30, housed within the outer retort 20, completely against the inflow of gases from the surroundings. An interspace 41 is formed between the inner retort wall 31 and the outer retort wall 21, as well as between the inner retort bottom 32 and the outer retort bottom 22.

The conversion gases flowing out of the inner retort 30 thus flow into the interspace 41, at least partially along the outer surfaces of the inner retort wall 31 and inner retort bottom 32, and at least partially along the inner surfaces of the outer retort wall 21 and outer retort bottom 22, exiting through the outer retort opening 24 into the conversion gas line 73.

The reactor chamber 10 comprises a reactor chamber wall 11, a reactor chamber bottom 12, and a reactor lid 17 that seals the internal volume of the reactor chamber 10. The outer retort 20 is housed within the reactor chamber 10. A flow channel 50 is formed between the outer surface of the outer retort wall 21 and the inner surface of the reactor chamber wall 11, as well as partially between the outer surface of the outer retort bottom 22 and the inner surface of the reactor chamber bottom 12. Centrally below the outer retort 20, an inlet opening 13 is located in the reactor chamber bottom 12. The inlet opening 13 is connected to a combustion gas line 74, through which a gaseous heating medium, particularly combustion gases, is introduced into the reactor chamber 10. The gaseous heating medium flows into the flow channel 50 between the outer retort 20 and the reactor chamber 10. In the reactor chamber wall 11, at the height of the outer retort opening 24, an outlet opening 14 is formed, through which the gaseous heating medium, in its cooled form, flows out of the flow channel 50 and consequently out of the reactor 1 into the flue gas line 81.

In the flow channel 50, a flow element 51 is arranged, which causes a pressure loss in the gaseous heating medium flowing through the flow channel 50. The flow element 51 is positioned in the flow channel 50 between the inlet opening 13 and the outlet opening 14. The side of the flow element 51 facing away from the inlet opening 13 is arranged at the edge of the outlet opening 14 closest to the inlet opening 13. The flow element 51 extends essentially radially into the flow channel 50 in the form of a circular ring, with the radially outer end arranged on the reactor chamber wall 11. A gap 52 is formed between the flow element 51 and the outer retort wall 21. The flow element 51 ensures that the heating gaseous medium flowing through the flow channel 50 experiences a pressure loss, allowing it to distribute evenly around the circumference of the outer retort 20 within the flow channel 50.

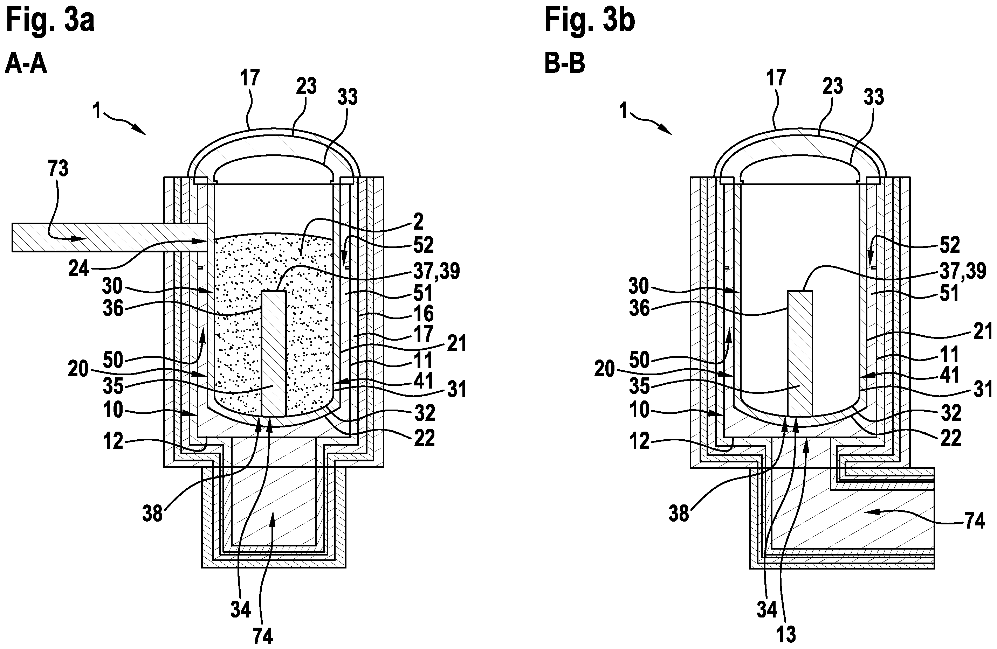

**Fig. 3a****-d** shows a schematic side view four different vertical sectional planes A-A to D-D through the reactor 1 as depicted in Fig. 1b.

**Fig. 3a** shows the sectional plane A-A through the reactor 1 and the conversion gas line 73. It displays the reactor 1 as in Fig. 2, with a solid biomass bed depicted inside the inner retort 30.

**Fig. 3b** shows the sectional plane B-B through the reactor and the combustion gas line 74. The combustion gas line 74 runs essentially horizontally to the reactor and features a 90-degree bend near the inlet opening 13. This design directs the gaseous heating medium flowing through the combustion gas line 74 into the reaction chamber 10 in a central and perpendicular manner relative to the outer surface of the outer retort bottom 22. The gaseous heating medium then spreads evenly along the curvature, uniformly flowing around the outer retort wall 21.

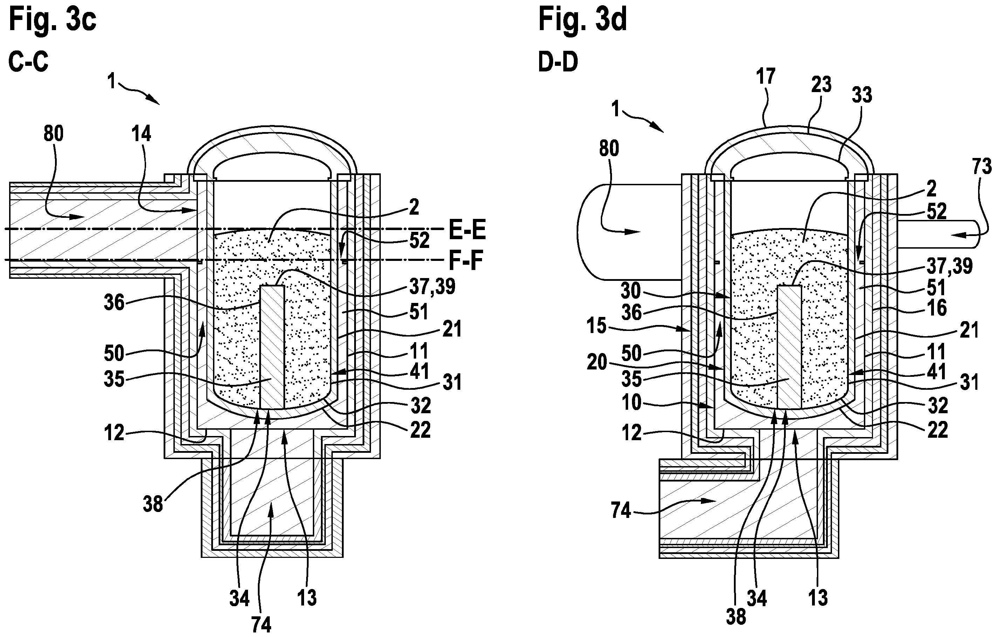

**Fig. 3c** shows the sectional plane C-C through the flue gas line 81. The outlet opening 14 in the reaction chamber wall 11 directly connects to the flue gas line 81. This plane represents the horizontal sectional plane E-E. Just below the lower end of the outlet opening 14, the flow element 51 is positioned in the flow channel 50, as indicated by the horizontal sectional plane F-F.

**Fig. 3d** shows the sectional plane D-D of the reactor 1, rotated by 45 degrees from sectional plane C-C. The flue gas line 81 and the conversion gas line 73 are positioned essentially at the same height in the reaction chamber wall 11 and the outer retort wall 21. This height is largely determined by the filling level of the solid biomass 2 before the start of the thermochemical conversion, as the heat transfer from the gaseous heating medium to the inner retort 30 occurs particularly through the conversion gas flowing in the interspace 41.

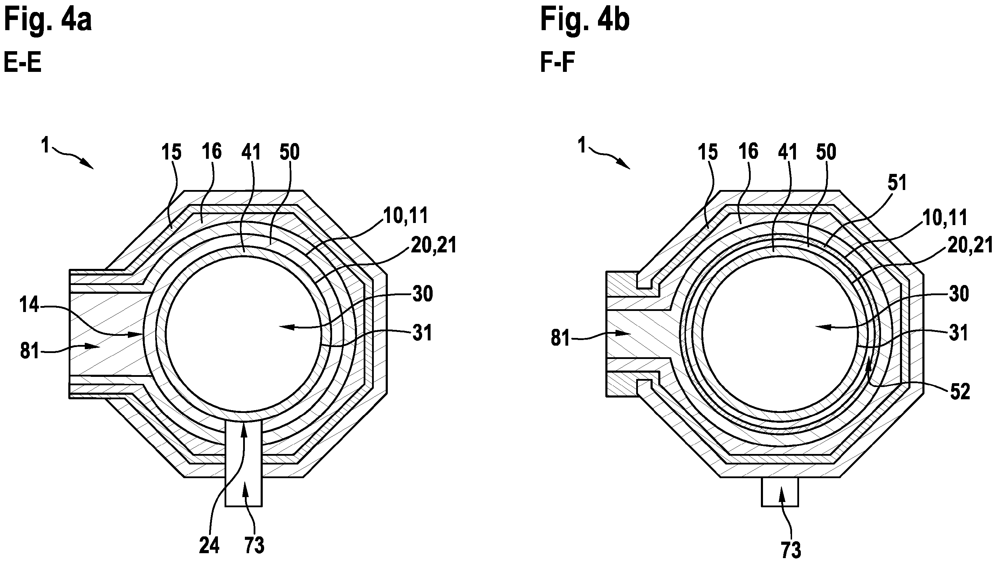

**Fig. 4a** shows the horizontal sectional plane E-E. Centrally located inside the reactor 1 is the cylindrical inner retort 30, surrounded by an annular interspace 41. The interspace 41 is radially bounded by the outer retort 20. The conversion gases flowing through the interspace 41 transition into the conversion gas line 73 in the area of the outer retort opening 24. Between the cylindrical reaction chamber wall 11 and the outer retort wall 21, the flow channel 50 is formed. The gaseous heating medium flowing through the flow channel 50 transitions into the flue gas line 81 in the area of the outlet opening 14.

**Fig. 4b** is shows the horizontal sectional plane F-F, located below the horizontal section plane E-E from Fig. 4a. At the lower end of the outlet opening 14, a ringshaped flow element 51 extends radially inward from the reaction chamber wall 11 into the flow channel 50. The flow element 51 strategically narrows the flow channel 50 to a defined extent. This creates a pressure loss in the gas flow, which allows the gaseous heating medium to distribute evenly around the outer retort 20 within the flow channel 50.

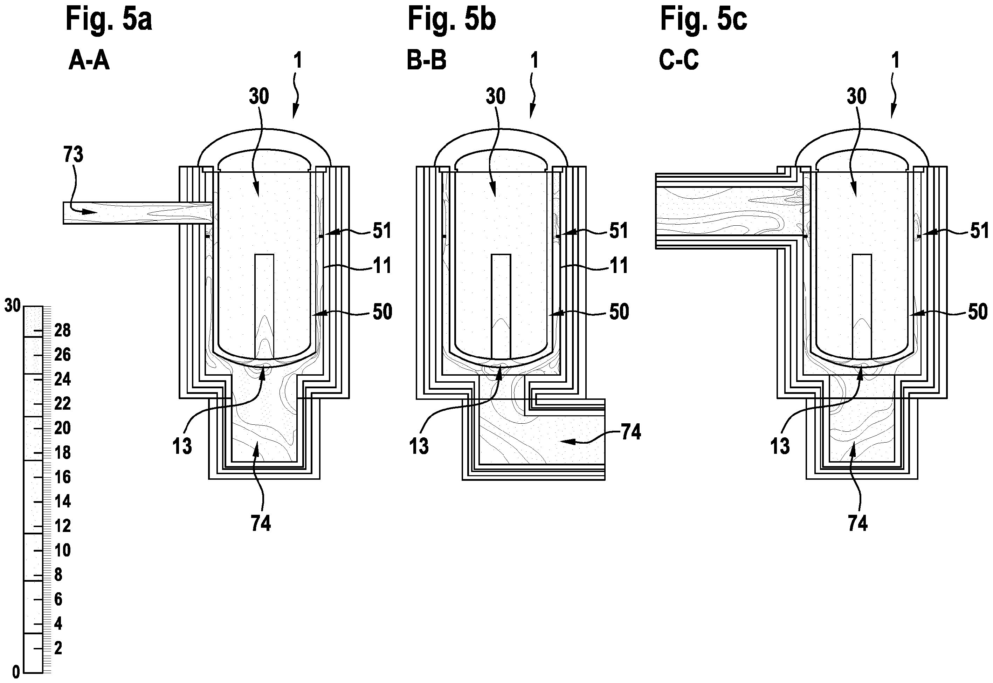

**Fig. 5a** - **5c** show the flow velocity in meters per second (m/s) for the gases flowing inside reactor 1.

Inside the inner retort 30, the conversion gas released from the solid biomass bed has very low flow velocities. Only within the exhaust device 35 and the interspace 41 around the inner retort opening 34 do flow velocities reach up to 4 m/s. In the area near the outer retort opening 24, the conversion gases accelerate, reaching flow velocities of up to 10 m/s upon entering the conversion gas line 73. Outside these areas, the gas flow in the interspace 41 remains below 2 m/s.

The gaseous heating medium, introduced into the flow channel 50via the combustion gas line 74 and the inlet opening 13, shows flow velocities of up to 20 m/s near the inlet opening 13. At the point where the gaseous heating medium impacts the outer retort bottom 22, a stagnation point forms. The medium then distributes from this point, flowing along the surface of the outer retort 20 at velocities of around 20 m/s.

In the area of the flow element 51, the gaseous heating medium is obstructed on the upstream side. Upon passing through the gap 52, high flow velocities form on the downstream side of the flow element.

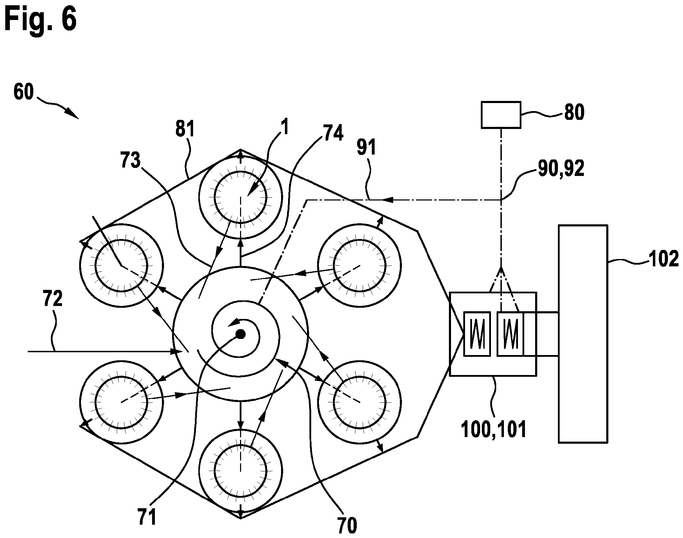

**Fig. 6** shows a plant 60 for the thermochemical conversion of solid biomass into biochar, according to the second aspect of the invention, in a schematic top view. At the center of the plant 60 is a combustion chamber 70, which includes a firing device 71 and an air supply 72 for combustion air. Surrounding the combustion chamber 70 are six reactors 1, designed according to the first aspect of the invention. Each reactor 1 is connected to the combustion chamber 70 by a conversion gas line 73. Additionally, each reactor 1 is connected to the combustion chamber 70 via a combustion gas line 74. The reactors 1 also each have a flue gas line 81, with the flue gas lines 81 of three reactors being combined. These flue gas lines 81 pass through a decoupling device 100, specifically a heat exchanger 101, and are eventually vented from the plant 60 by a flue gas device 80, such as a turbomachine generating a vacuum. At the decoupling device, heat is extracted from the flue gas. The thermal energy is converted into electrical energy by a downstream ORC turbine 102. Between the decoupling device 100 and the flue gas device 80, a recirculation device 90 is arranged, which recirculates flue gas from the flue gas line 81 back to the combustion chamber 70 through a recirculation line 91. The recirculation device 90 includes a control device 92, specifically a control valve, which regulates the volume of recirculated flue gas. The amount of flue gas recirculated controls the temperature within the combustion chamber.

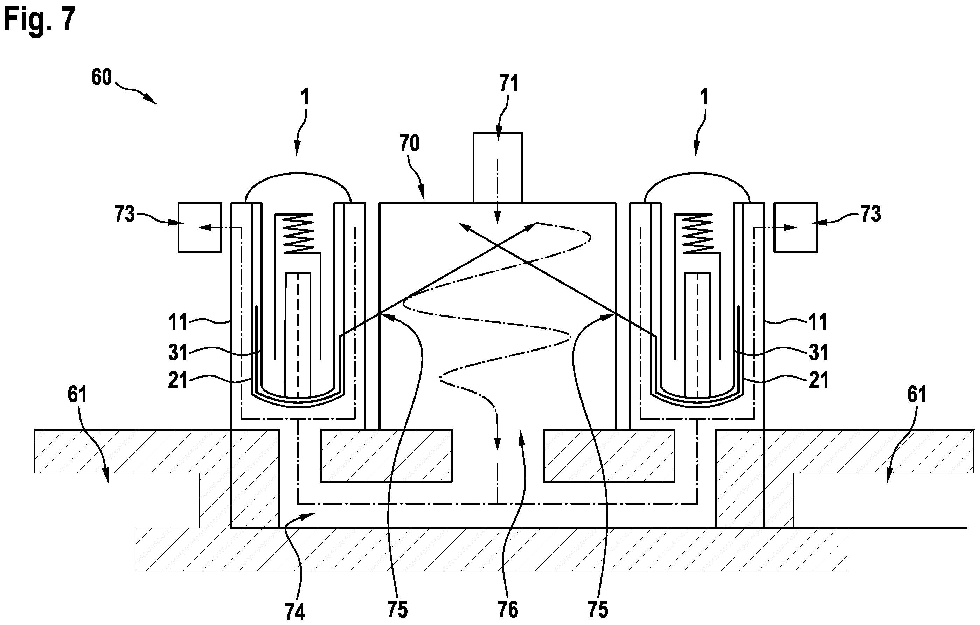

**Fig. 7** shows the plant 60 as depicted in **Fig. 6** in a schematic side view. The plant 60 is built on a foundation 61, with the reactors 1 positioned at ground level. The combustion gas lines 74, which connect the individual reactors 1 to the combustion chamber 70, are embedded in the foundation 61. The combustion chamber 70 includes a combustion inlet opening 75 and a combustion outlet opening 76, with a temperature sensor 78 positioned at the outlet to monitor the temperature of the exiting combustion gases. The firing device 71 at the top of the combustion chamber 70 burns the conversion gases entering through the combustion chamber inlet opening 75, producing combustion gases. These combustion gases exit through the combustion chamber outlet opening 76 into the combustion gas line 74 and ultimately serve as the gaseous heating medium for the reactors 1.

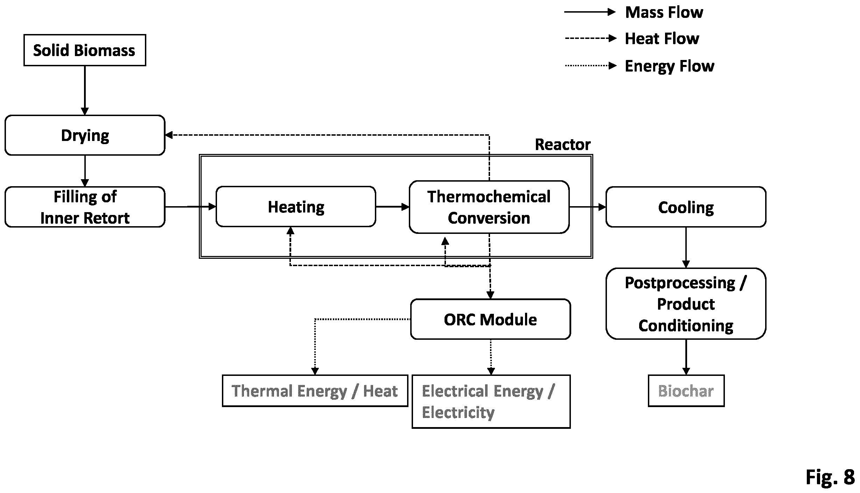

**Fig. 8** shows a flow chart illustrating the method for the thermochemical conversion of solid biomass 2 into biochar according to the third aspect of the invention. The process begins with drying the solid biomass 2 to reduce its water content. The dried biomass is then loaded into multiple inner retorts 30. The inner retorts 30, filled with solid biomass 2, are successively placed into a reactor 1, particularly in the outer retort 20, and sealed. The newly inserted inner retorts 30 are indirectly heated via a gaseous heating medium. Once the temperature inside the reactor 1 is sufficiently high, the biomass 2 inside the reactor is pyrolyzed, releasing conversion gases, which are directed into a combustion chamber 70. In the combustion chamber 70, the conversion gases are burned, generating combustion gases that release heat. This heat is used for the heating and pyrolysis processes of at least one other inner retort 30 in a reactor 1 at a later stage of the process, with the heat transferred as sensible heat via the combustion gas line 74 to the respective reactor 1. Alternatively or additionally, the heat is extracted from the system as thermal or electrical energy using a decoupling device 100 or an ORC turbine 102. The heat can also be used to dry the wet biomass 3. Finally, the produced biochar is removed from the inner retort 30, cooled, and post-processed for its final application.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: reactor
- 2: biomass
- 10: reactor chamber
- 11: reactor chamber wall
- 12: reactor chamber bottom
- 13: inlet opening
- 14: outlet opening
- 15: reactor insulation
- 16: ramming mass
- 17: reactor lid
- 20: outer retort
- 21: outer retort wall
- 22: outer retort bottom
- 23: outer retort lid
- 24: outer retort opening
- 30: inner retort
- 31: inner retort wall
- 32: inner retort bottom
- 33: inner retort lid
- 34: inner retort opening
- 35: exhaust device
- 36: exhaust device wall
- 37: exhaust device wall upper end
- 38: exhaust device wall lower end
- 39: exhaust device cover
- 40: exhaust slot
- 41: interspace
- 50: flow channel
- 51: flow element
- 52: gap
- 60: plant
- 61: foundation
- 70: combustion chamber
- 71: firing device
- 72: air supply
- 73: conversion gas line
- 74: combustion gas line
- 75: combustion chamber inlet opening
- 76: combustion chamber outlet opening
- 78: temperature sensor
- 80: flue gas device, chimney
- 81: flue gas line
- 90: recirculation device
- 91: recirculation line
- 92: control device, control valve
- 100: decoupling device
- 101: heat exchanger
- 102: Organic Rankine Cycle turbine

## Claims

1. A reactor (1) for thermochemical conversion of solid biomass (2) to biochar, in particular pyrolysis, consisting of a reactor chamber (10) with a reactor chamber wall (11), a reactor chamber bottom (12), an inlet opening (13) and an outlet opening (14), an outer retort (20) arranged within the reactor chamber (10) with an outer retort wall (21), an outer retort bottom (22), an outer retort lid (23) and an outer retort opening (24), and an inner retort (30) removably arranged in the outer retort (20) with an inner retort wall (31), an inner retort bottom (32), an inner retort lid (33) and an inner retort opening (34), wherein at least the partial, preferably complete outer surface of the inner retort wall (31) and/or at least the partial, preferably complete outer surface of the inner retort bottom (32) form an interspace (41) together with at least the partial, preferably complete inner surface of the outer retort wall (21) and/or at least the partial, preferably complete inner surface of the outer retort bottom (22), wherein at least the partial, preferably complete outer surface of the outer retort wall (21) and/or at least the partial, preferably complete outer surface of the outer retort bottom (22) form a flow channel (50) together with at least the partial, preferably complete inner surface of the reaction chamber wall (11) and/or at least the partial, preferably complete inner surface of the reaction chamber bottom (12), for guiding a gaseous heating medium from the inlet opening (13) to the outlet opening (14),
**characterised in that**
the flow channel (50) comprises at least one flow element (51) suitable for causing pressure loss within the gaseous heating medium.

2. The reactor (1) according to claim 1 **characterised in that** the interspace (41) and/or the flow channel (50) has/have an annular cross section.

3. The reactor (1) according to claim 1 or 2 **characterised in that** the inner retort opening (34) is arranged at the inner retort bottom (32) and/or the outer retort opening (24) is arranged at the outer retort wall (21) and/or the inlet opening (13) is arranged at the reaction chamber bottom (12) and/or the outlet opening (14) is arranged at the reactor chamber wall (11).

4. The reactor (1) according to one of claims 1 to 3 **characterised in that** the flow element (51) is arranged in the flow channel (50) between the inlet opening (13) and the outlet opening (14), wherein preferably the side of the flow element (51) facing away from the inlet opening (13) is arranged at the edge of the outlet opening (13) that is closer to the inlet opening (13).

5. The reactor (1) according to one of claims 1 to 4 **characterised in that** the flow element (51) extends essentially radially into the flow channel (50), preferably in the form of a circular ring, wherein the flow element (51) is arranged with the radially inner end on the outer retort wall (21) or with the radially outer end on the reactor chamber wall (11), wherein a gap (52) is formed between the flow element (51) and the reactor chamber wall (11) or between the flow element (51) and the outer retort wall.

6. The reactor (1) according to one of claims 1 to 5 **characterised in that** the inlet opening (13) is arranged in the reactor chamber wall (11) and/or reactor chamber bottom (12) in such a way that the gaseous heating medium is at least partially, preferably completely directed essentially perpendicular to the surface normal of the outer retort bottom (22) when it is fed into the reactor chamber (10).

7. The reactor (1) according to one of claims 1 to 6 **characterised in that** an exhaust device (35) for exhausting conversion gases is arranged inside the inner retort (30), wherein the exhaust device (35) is arranged at the inner surface of the inner retort wall (31) and/or the inner surface of the inner retort bottom (32) and is fluidically connected to the inner retort opening (34).

8. A plant (60) for the thermochemical conversion of solid biomass (2) to biochar, in particular pyrolysis, comprising
• a plurality of reactors (1) according to one of claims 1 to 7, in particular five to seven reactors (1), preferably six reactors (1),
• at least one combustion chamber (70) with at least one firing device (71), at least one air supply (72), at least one combustion chamber inlet opening (75) and at least one combustion chamber outlet opening (76), and
• at least one flue gas device (80), in particular a chimney,
wherein the outer retort opening (24) of at least one reactor (1) is fluidically connected to the combustion chamber inlet opening (75) by at least one conversion gas line (73), the combustion chamber outlet opening (76) is fluidically connected to the inlet opening (13) of at least the one reactor (1) by at least one combustion gas line (74) and the outlet opening (14) of at least the one reactor (1) is fluidically connected to the flue gas device (80) by at least one flue gas line (81).

9. The plant (60) according to claim 8 **characterised in that** the reactors (1) are operable independently of each other, in particular temporally consecutively, preferably one after the other.

10. The plant (60) according to claim 8 or 9 **characterised in that** the reactors (1) are arranged in a circle around the combustion chamber (70), wherein the combustion gas line (74) is designed to have the shortest possible length.

11. The plant (60) according to one of claims 8 to 10 **characterised in that** the flue gas device (80) comprises at least one turbomachine, in particular an induced draft, wherein the turbomachine generates a vacuum in the combustion chamber.

12. The plant (60) according to one of claims 8 to 11 **characterised in that** the plant (60) comprises at least one recirculation device (90) for at least partial, preferably complete recirculation of the gaseous heating medium discharged from at least one reactor (1) back into the combustion chamber (70) by a recirculation line (91), wherein the recirculation device (90) is arranged in the flue gas line (81) before the flue gas device (80).

13. A process for the thermochemical conversion of solid biomass (2) to biochar, in particular pyrolysis, for a plant (60) according to one of claims 8 to 12, comprising the process steps:
• If necessary, drying the solid biomass (2);
• Filling an inner retort (30) with the solid biomass (2) and sealing the inner retort (30) with the inner retort lid (33);
• Arranging the inner retort (30) in an outer retort (20) in temporally consecutive order and sealing the outer retort (20) with the outer retort lid (23);
• Heating, at least partially, preferably completely indirect, the solid biomass (2) in the inner retort (30) by a gaseous heating medium through the outer retort wall (21) and the interspace (41);
• Thermally converting the solid biomass (2) to biochar within the inner retort (30) under formation of conversion gases; and
• If necessary, cooling and preparing of the resulting biochar;
wherein the conversion gases formed during thermochemical conversion from at least one reactor (1) are at least partially, preferably completely discharged through the inner retort opening (34) into the interspace (41), wherein the conversion gases flow at least partially, preferably completely through the outer retort wall opening (24) into the conversion gas line (73), wherein the conversion gases are at least partially, preferably completely fed into the combustion chamber (70) through the combustion chamber inlet opening (75), wherein the conversion gases are burned at least partially, preferably completely to combustion gases within the combustion chamber (70) by at least one firing device (71), wherein the combustion gases is used as a gaseous heating medium and is fed at least partially, preferably completely into the reactor chamber (10) of at least one reactor (1) for indirect heating of the solid biomass (2), wherein the gaseous heating medium is discharged as flue gas by the flue gas line (81) from at least one reactor (1) by at least one flue gas device (80).

14. The process according to claim 13 **characterised in that** the reactors (1), one after the other, carry out the individual process steps in such a way that the firing device (71) is essentially continuously supplied with conversion gas from the reactors (1) and that the temperature and/or the mass flow rate of the combustion gases at the combustion chamber outlet opening (76) is essentially constant.

15. The process according to claim 13 or 14 **characterised in that** the flue gas is at least partial, preferably complete recirculated into the combustion chamber (70) through the recirculation line (91) after discharging from at least one reactor (1).
